# EUROPÄISCHE PATENTANMELDUNG

(11) **EP 2 468 376 A1**
(43) Veröffentlichungstag der Anmeldung: **27.06.2012**
(21) Anmeldenummer: 11009611.2
(22) Anmeldetag: 06.12.2011
(51) Int. Cl.: B01D 3/00, B01D 53/18, F25J 3/04

(54) **Flüssigkeitsverteiler für Packungskolonne**

(30) Priorität: 23.12.2010 DE 102010056023
(71) Anmelder: Linde Aktiengesellschaft, 80331 Munich (DE)
(72) Erfinder: Alzner, Gerhard, 81476 München (DE); Bauer, Ludwig, 85114 Buxheim (DE); Matten, Christian, 82049 Pullach (DE); Moll, Anton, 82399 Raisting (DE)
(74) Vertreter: Galander, Marcus

(57) **Zusammenfassung**

Die Erfindung betrifft eine Kolonne (1), mit einem Abschnitt (9), in dem eine Füllung (10) in Form einer Mehrzahl an Füllkörpern oder einer Packung angeordnet ist, einem Flüssigkeitsverteiler (100) zur Verteilung einer Flüssigkeit (F) auf jene Füllung (10), einem Verteilraum (101) des Flüssigkeitsverteilers (100), über den die Flüssigkeit (F) auf jene Füllung (10) der Kolonne (1) verteilbar ist. Erfindungsgemäß ist vorgesehen, dass im Verteilraum (101) des Flüssigkeitsverteilers (100) ein zusätzliches Mittel (20) angeordnet ist, das eine Mehrzahl an Durchgängen (21) für die zu verteilende Flüssigkeit (F) ausbildet.

## Beschreibung

Die Erfindung betrifft eine Kolonne gemäß dem Oberbegriff des Anspruchs 1.

Eine derartige Kolonne weist zumindest einen Abschnitt auf, in dem eine Füllung in Form einer Mehrzahl an Füllkörpern (regellose Füllkörperschüttung) oder in Form einer strukturierten Packung angeordnet ist, einen Flüssigkeitsverteiler, der - bezogen auf einen bestimmungsgemäß angeordneten Zustand der Kolonne - oberhalb des Abschnittes angeordnet ist und zur Verteilung einer Flüssigkeit auf jene Füllung eingerichtet und vorgesehen ist, sowie einen Verteilraum des Flüssigkeitsverteilers zur Aufnahme der zu verteilenden Flüssigkeit, über den die Flüssigkeit auf jene Füllung der Kolonne verteilbar ist.

Kolonnen zum Stoff- und Wärmeaustausch zwischen einer gasförmigen und flüssigen Phase (auch Stoffaustauschkolonnen genannt) sind aus zahlreichen verfahrenstechnischen Anwendungen bekannt und werden sowohl in sogenannten "on-shore"- als auch in sogenannten "off-shore"- Anlagen eingesetzt. In der Regel strömt dabei ein Stoff oder Stoffgemisch zumeist gasförmig entlang einer Längsachse der Kolonne von unten nach oben durch die besagte Füllung der Kolonne. Ein zweiter Stoff oder ein Stoffgemisch, zumeist in flüssiger Phase (Flüssigkeit), wird oberhalb der Füllung aufgegeben und durchströmt die Kolonne entlang der Längsachse von oben nach unten. Hierbei geraten die beiden Stoffe oder Stoffgemische innerhalb der Füllung in intensiven Kontakt miteinander, wodurch sich der gewünschte Stoff- oder Wärmeaustausch ergibt. In derartigen Gegenstromapparaten mit Füllkörpern oder Packungen ist es entscheidend, dass die im Stoff- oder Wärmeaustausch befindlichen Stoffe oder Stoffgemische über den Querschnitt der Kolonne ein konstantes Verhältnis zueinander haben. Bei Kolonnen mit der besagten Füllung (z.B. Schüttfüllkörpern und/oder strukturierte Packungen) wird diesbezüglich zur Flüssigkeitsaufgabe auf die Füllung der Kolonne ein Flüssigkeitsverteiler der eingangs dargestellten Art verwendet. Diesbezüglich ist beachtlich, dass die Verteilungsqualität bzw. Verteilgüte eines solchen Flüssigkeitsverteilers den Stoff- und/oder Wärmeaustausch sowie die Wirksamkeit der jeweiligen Füllung der betrachteten Kolonne beeinflusst.

Der vorliegenden Erfindung liegt hiervon ausgehend das Problem zugrunde, bei einer Kolonne der eingangs dargestellten Art die Verteilgüte einer Flüssigkeitsverteilung mit einfachen Mitteln zu verbessern.

Dieses Problem wird durch eine Kolonne mit den Merkmalen des Anspruchs 1 gelöst.

Danach ist vorgesehen, dass zur Verbesserung der Verteilgüte des Flüssigkeitsverteilers im Verteilraum des Flüssigkeitsverteilers ein zusätzliches Mittel vorgesehen ist, das eine Mehrzahl an (engen) Durchgängen für die zu verteilende Flüssigkeit ausbildet, um so insbesondere den Eintrag von Feststoffen, Gasblasen zu verhindern bzw. Energie zu brechen.

Bevorzugt wird das besagte Mittel dabei durch eine Mehrzahl an (losen) übereinander geschichteten und/oder nebeneinander angeordneten Füllelementen (Füllkörpern), insbesondere in Form von Kugeln, Ringzylindern, Sattelringen oder Sattelkörpern, gebildet, die auf diese Weise eine dreidimensionale Packung bilden.

Alternativ hierzu kann das Mittel durch ein Drahtgestrick oder Streckmetall gebildet sein, dass eine Mehrzahl der besagten Durchgänge für die zu verteilende Flüssigkeit (flüssige Phase) bereitstellt.

In einer weiteren Variante der Erfindung kann das besagte Mittel als ein Sieb zum Abscheiden von Feststoffpartikeln aus der zu verteilenden Flüssigkeit ausgebildet sein, insbesondere in Form eines flächigen Elementes (oder eine aus flächigen Elementen gebildete Einheit), mit einer Vielzahl an Durchgängen in Form von Durchgangsöffnungen des Siebes, die dazu ausgebildet sind, von der zu verteilenden Flüssigkeit durchströmt zu werden, wobei die besagten Durchgänge insbesondere so beschaffen bzw. dimensioniert sind, dass in der zu verteilenden Flüssigkeit enthaltene Feststoffpartikel ab einer vordefinierbaren Größe nicht durch die Durchgänge hindurchtreten können und somit am Sieb (Filter) abgeschieden werden. Vorzugsweise bestehen das Sieb bzw. dessen Elemente aus einem Metall.

Das besagte erfindungsgemäße Mittel ist bevorzugt so in dem Verteilraum des Flüssigkeitsverteilers angeordnet, dass z.B. in einer der folgenden Weisen auf die zu verteilende Flüssigkeit durch das Mittel eingewirkt wird: die zu verteilende Flüssigkeit wird beim Durchströmen bzw. Füllen der durch das Mittel bereitgestellten Durchgänge gebremst (Energievernichtung), Bewegungen der Flüssigkeit, insbesondere laterale (horizontale) Bewegungen der in den Durchgängen befindlichen Flüssigkeit entlang des Querschnitts der Kolonne werden durch Wechselwirkung mit dem Mittel gemindert, und eine Entgasung (nach Eintrag von Gasblasen) der in den Durchgängen aufgenommenen, zu verteilenden Flüssigkeit wird bewirkt bzw. unterstützt, indem das besagte Mittel eine vergleichsweise hohe effektive Oberfläche zur Verfügung stellt.

Hierdurch wird jeweils die Verteilgüte der Kolonne bzw. des Flüssigkeitsverteilers der Kolonne signifikant verbessert: wird z.B. eine aufzugebende bzw. zu verteilende Flüssigkeit aus einer Rohrleitung zugegeben, trägt diese aufgrund ihrer regelmäßig relativ hohen Strömungsgeschwindigkeit einen entsprechend hohen Impuls in die Kolonne ein, der durch eine bremsende Wirkung des besagten Mittels abgebaut wird, was eine Gleichverteilung der Flüssigkeit erleichtert und somit die Verteilgüte verbessert.

Liegt beispielsweise der Fall einer "off-shore"-Anwendungen vor, werden laterale Flüssigkeitsbewegungen, also quer zur Längsachse der Kolonne, im Verteilraum durch das besagte Mittel (z.B. in Form von Schüttfüllkörpern, wie oben beschrieben, oder in Form von Streckmetallen oder Drahtgestricken) gemindert und insbesondere Flüssigkeitswellen gebrochen. Hierdurch werden unterschiedliche Flüssigkeitsstände ausgeglichen und damit eine gleichmäßige Flüssigkeitsverteilung über den Querschnitt der Kolonne gewährleistet.

Für den Fall, dass der zu verteilende Flüssigkeitsstrom beispielsweise Gas enthält oder aufgrund der Gegebenheiten in der Kolonne Gas in den Verteiler eingetragen wird (z.B. bei zweiphasigen Feedströmen oder durch Gaseintrag der abfließenden Flüssigkeit), sorgt das besagte Mittel ggf. vor der eigentlichen Flüssigkeitsverteilung für eine Entmischung von Gas und Flüssigkeit (Entgasung), so dass überhaupt eine Gleichverteilung der Flüssigkeit über den Querschnitt der Kolonne gewährleistet werden kann.

Bei einem erfindungsgemäßen Mittel in Form eines Siebes (Filters) können weiterhin Feststoffpartikel, die in den Flüssigkeitsverteiler eingetragen werden, und daher Verteillöcher des Flüssigkeitsverteilers, über die die Flüssigkeit auf die Füllung der Kolonne verteilt wird, verschließen könnten und mithin den Flüssigkeitsverteiler zum Überlaufen bringen könnten, an dem besagten Mittel abgeschieden, was ebenfalls die Verteilgüte des Flüssigkeitsverteilers verbessert.

Vorzugsweise weist der Verteilraum einen Hauptkanal auf, der entlang der Längsachse der Kolonne, die bei einer bestimmungsgemäß angeordneten Kolonne mit der Vertikalen zusammenfällt, oberhalb des besagten Abschnitts der Kolonne angeordnet ist, und zum Verteilen der (zu verteilenden) Flüssigkeit auf vom Hauptkanal abgehende Verteilarme des Flüssigkeitsverteilers ausgebildet ist. Hierbei ist das besagte Mitte! vorzugsweise im Hauptkanal und/oder in den Verteilarmen angeordnet. Die Verteilarme dienen ihrerseits zum Verteilen der Flüssigkeit auf die Füllung der Kolonne und zwar über den gesamten Querschnitt der Kolonne. Hierzu weisen die Verteilarme jeweils entsprechende Verteillöcher auf, über die die Flüssigkeit auf die darunter liegende Füllung der Kolonne gegeben wird.

Bei einem Mittel in Form eines Siebes (siehe oben) ist dieses bevorzugt im Hauptkanal angeordnet, wobei das Sieb insbesondere aus zwei längs erstreckten, aufeinander zulaufenden Schenkeln gebildet ist, so dass sich das Sieb im Querschnitt zum Boden des Hauptkanals hin verjüngt. Dabei erstrecken sich die beiden Schenkel des Siebes, die z.B. aus einem Streckmetall gefertigt sein können, jeweils entlang einer Erstreckungsrichtung, entlang der auch der Hauptkanal längs erstreckt ist. Die durch die beiden Schenkel gebildete, entlang jener Erstreckungsrichtung verlaufende Kante (freier Endbereich) des Siebes weist dabei in Richtung auf den Boden des Hauptkanals.

In einer weiteren Variante der Erfindung kann der Verteilraum als ein insbesondere zylindrischer Verteiltopf ausgebildet sein oder einen solchen Verteiltopf aufweisen. Der Verteiltopf weist dabei bevorzugt einen Boden mit Verteillöchern auf, über die die im Verteiltopf befindliche, zu verteilende Flüssigkeit nach unten weiter gegeben werden kann bzw. auf eine Füllung der Kolonne verteilt werden kann, sowie eine vom Boden abgehende, umlaufende Wandung. Hierbei ist bei einem Mittel in Form eines Siebes das Sieb vorzugsweise trichterförmig bzw. konusförmig ausgebildet, so dass das Sieb ein sich verjüngendes freies Ende ausbildet, das auf den Boden des Verteiltopfes weist. Das Sieb kann dabei über einen äußeren umlaufenden Randbereich an der Wandung des Verteiltopfes festgelegt sein.

Weiterhin kann der Verteilraum insbesondere auch als ein Sammelraum zum Sammeln der zu verteilenden Flüssigkeit ausgebildet sein bzw. einen solchen Sammelraum aufweisen. Ein derartiger Sammelraum weist dabei bevorzugt einen Boden mit einer davon abgehenden umlaufenden (ggf. zylindrischen) Wandung auf; wobei vom Boden insbesondere Verteilerkamine zum Durchleiten einer gasförmigen Phase durch den Sammelraum (von unten nach oben entlang der Längsachse der Kolonne) abgehen. Hierbei ist das besagte Mittel vorzugsweise zwischen den Verteilerkaminen am Boden des Sammelraumes anliegend angeordnet, wobei es vorzugsweise eine den Boden des Sammelraums bedeckende, dreidimensionale Packung aus losen Füllelementen (insbesondere in Form von Kugeln bzw. in Form der oben beschriebenen Körper) bildet. Zum Durchlassen der Flüssigkeit nach unten bzw. zum Verteilen der Flüssigkeit weist der Boden des Sammelraums zumindest ein Verteilloch auf.

Natürlich kann auch ein Flüssigkeitsverteiler an sich als ein wesentlicher Gedanke der Erfindung eigenständig weiterverfolgt werden. Ein solcher Flüssigkeitsverteiler weist zumindest die nachfolgenden Merkmale auf und kann durch die in den Unteransprüchen enthaltenen Merkmale weitergebildet werden: Einen Verteilraum, über den die Flüssigkeit auf eine darunter anordenbare Füllung einer Kolonne verteilbar ist, wobei im Verteilraum des Flüssigkeitsverteilers (zur Verbesserung der Verteilgüte des Flüssigkeitsverteilers) ein zusätzliches Mittel angeordnet ist, das eine Mehrzahl an Durchgängen für die zu verteilende Flüssigkeit ausbildet.

Weitere Merkmale und Vorteile der Erfindung sollen bei den nachfolgenden Figurenbeschreibungen eines Ausführungsbeispiels anhand der Figuren erläutert werden.

Es zeigen:
- Fig. 1: eine ausschnitthafte Schnittansicht einer Kolonne mit einem Verteiltopf eines Flüssigkeitsverteilers, aufweisend ein Mittel zum Verbessern der Verteilgüte des Flüssigkeitsverteilers in Form eines trichterförmigen Siebes;
- Fig. 2: eine perspektivische, teilweise geschnittene Ansicht des in der Figur 1 gezeigten Verteiltopfes;
- Fig. 3: eine schematische, ausschnitthafte Schnittansicht einer Kolonne mit einem Flüssigkeitsverteiler, aufweisend einen Hauptkanal und davon abgehende Verteilarme sowie ein im Hauptkanal angeordnetes Mittel in Form eines längs erstreckten Siebes zum Verbessern der Verteilgüte des Flüssigkeitsverteilers;
- Fig. 4: eine perspektivische, teilweise geschnittene Ansicht eines Flüssigkeitsverteilers einer Kolonne mit einem Sieb, das dem Sieb gemäß Figur 3 ähnlich ist;
- Fig. 5: eine perspektivische, teilweise geschnittene Ansicht eines Flüssigkeitsverteilers einer Kolonne mit einem Hauptkanal und davon abgehenden Verteilarmen, wobei im Hauptkanal und in den Verteilarmen ein Mittel in Form von regellos angeordneten Füllelementen vorgesehen ist; und
- Fig. 6: eine perspektivische, teilweise geschnittene Ansicht eines Sammelraumes eines Flüssigkeitsverteilers einer Kolonne mit Verteilerkaminen und einem zwischen den Kaminen vorgesehenen Mittel in Form von regellos angeordneten Füllelementen zum Verbessern der Verteilgüte des Flüssigkeitsverteilers.

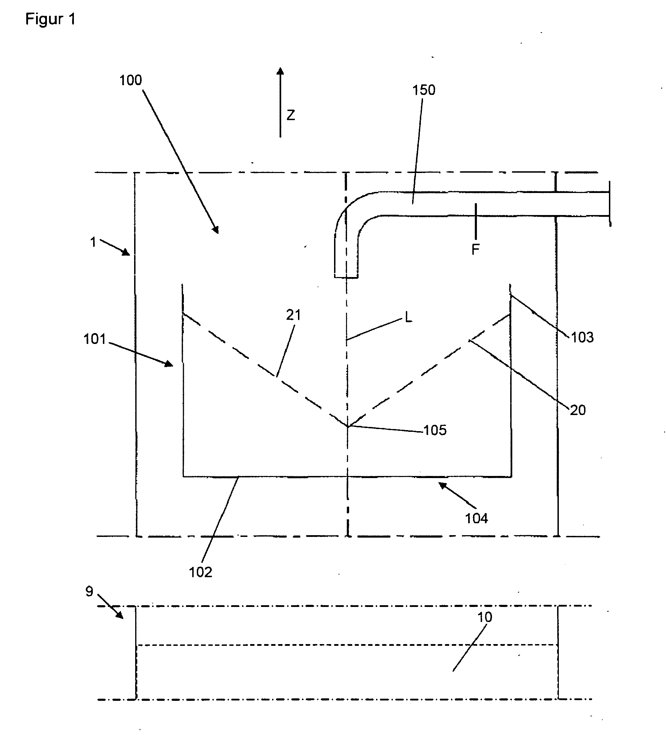

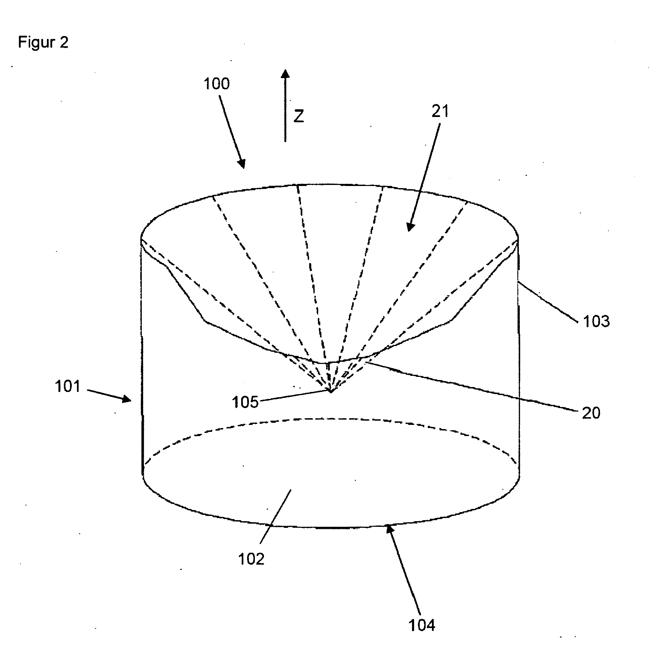

Figur 1 zeigt im Zusammenhang mit Figur 2 eine entlang einer Längsachse L längs erstreckte,für den Gegenstrombetrieb geeignete Kolonne 1, die einen entlang der Längsachse L erstreckten (zylindrischen) Mantel aufweist, mit zumindest einem ersten Abschnitt 9, in dem eine Füllung der Kolonne 1 in Form einer regellosen Schüttung von Füllkörpern 10 oder einer strukturierten Packung 10 angeordnet ist. Die Längsachse L der Kolonne 1 fällt - bezogen auf einen bestimmungsgemäß angeordneten Zustand der Kolonne 1 - mit der Vertikalen Z zusammen. Innerhalb der Kolonne 1 benetzt eine flüssige Phase (Flüssigkeit) F die regellosen Füllkörperschüttungen bzw. die strukturierten Packungen, mit denen die Kolonne 1 befüllt ist und fließt, angetrieben durch die Schwerkraft, abwärts. Eine in die Kolonne 1 eingeleitete gasförmige Phase bewegt sich aufwärts. Da beide Phasen gezwungen sind, sich durch eine Vielzahl an durch die Füllung 10 bereitgestellter enger Kanäle zu bewegen, wird die Wechselwirkung zwischen beiden Phasen erhöht.

Zum möglichst gleichmäßigen Verteilen der flüssigen Phase F über den gesamten quer zur Längsachse L erstreckten Querschnitt der Füllung 10 weist die Kolonne 1 oberhalb jener Füllung 10 bzw. oberhalb des Abschnittes 9 einen Flüssigkeitsverteiler 100 auf. Es ist natürlich möglich, dass die Kolonne 1 entlang der Längsachse L bzw. entlang der Vertikalen Z eine Mehrzahl an übereinander angeordneten Füllungen 10 aufweist. In diesem Fall ist vorzugsweise jeweils oberhalb einer solchen Füllung 10 ein Flüssigkeitsverteiler 100 vorgesehen.

Gemäß Figur 1 weist die Kolonne 1 einen Flüssigkeitsverteiler 100 in Form eines Topfverteilers auf, mit einem Verteilraum 101 in Form eines zylindrischen Verteiltopfes, der koaxial in der Kolonne 1 oberhalb des Abschnittes 9 angeordnet ist.

Der Verteiltopf 101 weist einen Boden 102 auf, von dem eine umlaufende Wandung 103 abgeht, die eine Öffnung des Verteiltopfes 101 begrenzt, über die der Verteiltopf 101 mit der Flüssigkeit F befüllt werden kann. Zum Verteilen der flüssigen Phase F nach unten weist der Verteiltopf 101 vorzugsweise eine Mehrzahl an Verteillöchern 104 auf, die regelmäßig (insbesondere äquidistant) über den Boden 102 verteilt sein sollen.

In dem Verteiltopf 101 ist ein Mittel 20 in Form eines trichterförmigen Siebes angeordnet, das sich zu einem freien Ende 105 des Siebes 20 hin verjüngt, welches dem Boden 102 des Verteiltopfes 101 zugewandt ist. Das Sieb 20 bildet eine Vielzahl an Durchgängen (Durchgangslöchern) 21 für die flüssige Phase F aus, so dass in der flüssigen Phase F befindliche Feststoffpartikel (ab einer gewissen Größe) am Sieb 20 abgeschieden werden, um ein Verschließen der Verteillöcher 104 durch solche Feststoffpartikel zu verhindern. Weiterhin wird die auf das Sieb 20 gegebene Flüssigkeit F aufgrund der verhältnismäßig kleinen Durchgänge 21 des Siebes 20 zusätzlich durch das Sieb in gewissem Maße beruhigt bzw. abgebremst, was ebenfalls einer gleichmäßigen Verteilung der Flüssigkeit F förderlich ist.

Zum Einleiten der Flüssigkeit F in das Sieb 20 ist ggf. eine Leitung 150 vorgesehen, deren Auslass entlang der Längsachse L oberhalb des freien Endes 105 des Siebes 20 angeordnet ist.

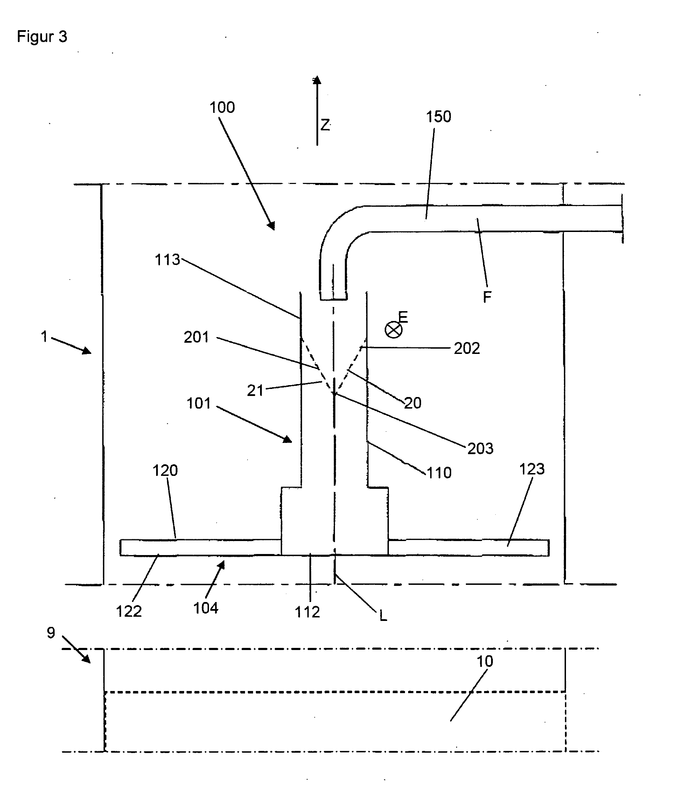

Figur 3 zeigt im Unterscheid zur Figur 1 einen Flüssigkeitsverteiler 100 mit einem entlang einer senkrecht zur Längsachse L verlaufenden Erstreckungsrichtung E erstreckten Hauptkanal 110 und davon abgehenden Verteilarmen 120, über deren Verteillöcher 104, die jeweils in Böden 122 der Verteilarme 120 vorgesehen sind, die flüssige Phase F auf eine darunter liegende Füllung 10 der Kolonne 1 verteilt werden kann. Der Hauptkanal 110 sowie die Verteilarme 120 weisen jeweils von den zugeordneten Böden 112 bzw. 122 abgehende Wandungen 113 bzw. 123 auf.

Die Wandung 113 des Hauptkanals 110 ist dabei nach oben hin offen, so dass die zu verteilende flüssige Phase F wiederum über eine Leitung 150, deren Auslass oberhalb des Hauptkanals 150 platziert ist, in den Hauptkanal 110 eingeleitet werden kann. Zum Filtern der eingelassenen Flüssigkeit F (siehe oben) ist nun im Hauptkanal 110 ein sich im Wesentlichen über den gesamten Querschnitt des Hauptkanals 110 erstreckendes Mittel 20 in Form eines Siebes 20 angeordnet, das aus zwei entlang der Erstreckungsrichtung E erstreckten flächigen Schenkeln 201, 202 gebildet ist, die in Richtung auf einen Boden 112 des Hauptkanales 110 aufeinander zu laufen, so dass das Sieb 20 eine entlang der Erstreckungsrichtung E verlaufende Kante bzw. freien Endbereich 203 aufweist. Auch hier wird die auf das Sieb 20 über die Leitung 150 aufgegebene Flüssigkeit F durch das Sieb 20 zusätzlich beruhigt (siehe oben), was ebenfalls die Verteilgüte verbessert, da so die Bildung eines möglichst konstanten Füllstandes in den geschlossenen Verteilarmen 120 unterstützt wird.

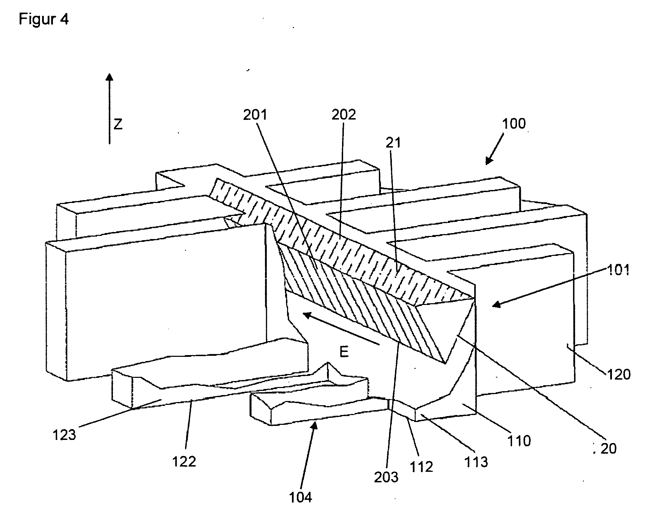

Figur 4 zeigt in einer perspektivischen Ansicht einen Flüssigkeitsverteiler 100 mit einem Verteilraum 101, bei dem wiederum von einem entlang einer Erstreckungsrichtung E erstreckten Hauptkanal 110 mit Boden 112 und davon abgehender Wandung 113 mehrere Verteilarme 120 zu beiden Seiten des Hauptkanales 110 abgehen, deren Böden 122 in einer Erstreckungsebene mit dem Boden 112 des Hauptkanales 110 liegen, wobei von den Böden 122 der Verteilarme 120 abgehende Wandungen 123 der Verteilarme 120 entlang der Vertikalen Z insbesondere die gleiche Höhe aufweisen wie die Wandung 113 des Hauptkanales 110.

Der Hauptkanal 110 und ggf. die Verteilarme 120 sind nach oben hin offen, so dass gemäß Figur 3 eine zu verteilende flüssige Phase F ebenfalls von oben in den Hauptkanal 110 eingeleitet werden kann. Dabei ist im Hauptkanal 110 wiederum ein Sieb 20 nach Art der Figur 3 angeordnet, das zum Filtern der zu verteilenden Flüssigkeit F dient und somit ein Verschließen der Verteillöcher 104 des Flüssigkeitsverteilers 100 verhindert, was zu einer Verbesserung der Verteilgüte des Verteilers 100 führt.

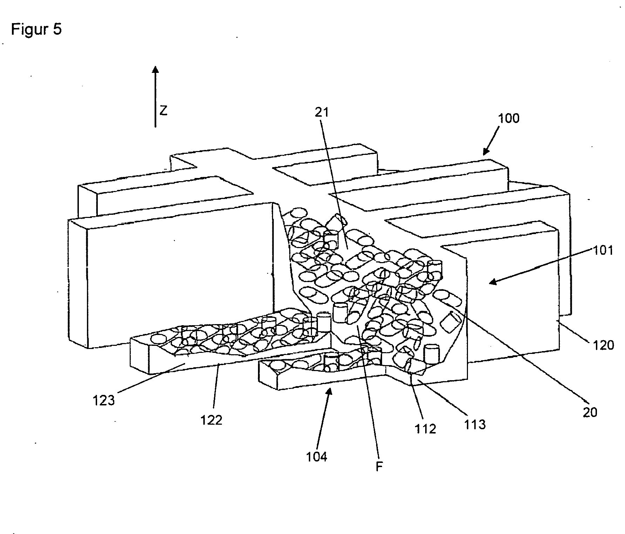

Figur 5 zeigt einen Flüssigkeitsverteiler 100 nach Art der Figur 4, wobei im Unterschied zur Figur 4 kein Sieb 20 gemäß Figur 4 im Hauptkanal 110 angeordnet ist, sondern eine Mehrzahl an nebeneinander und übereinander positionierten Füllelementen 20, die den Boden 112 des Hauptkanals 110 sowie die Böden 122 der Verteilarme 120 bedecken und dabei eine dreidimensionale Packung bilden, die eine Mehrzahl an engen Durchgängen 21 für die zu verteilende Flüssigkeit F bereitstellt (die einzelnen Füllelemente 20 liegen aneinander an). Dies fördert die Verteilgüte des Flüssigkeitsverteilers 100, da hierdurch zum einen die in den Verteilraum 101 eingeleitete flüssige Phase F gebremst und insbesondere hinsichtlich lateraler Bewegungen (Wellen) beruhigt wird. Zum anderen wird durch die hohe effektive Oberfläche der Füllelemente 20 in ihrer Gesamtheit die Entgasung der Flüssigkeit F innerhalb des Verteilraumes 101 unterstützt.

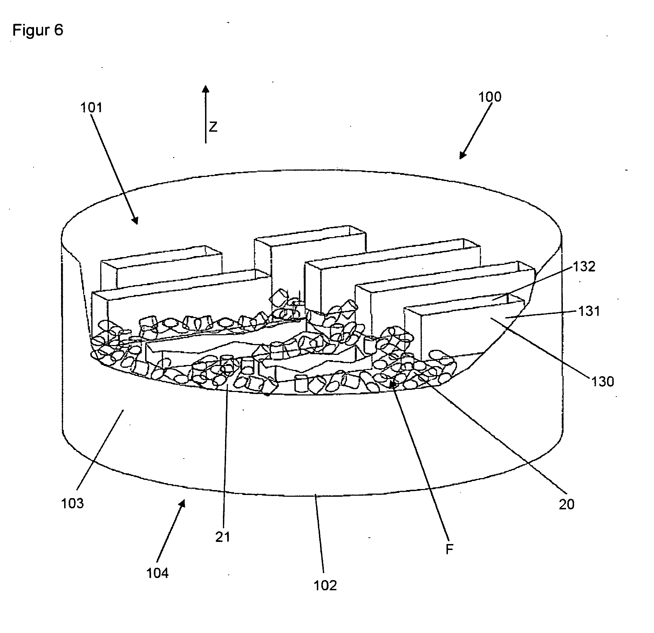

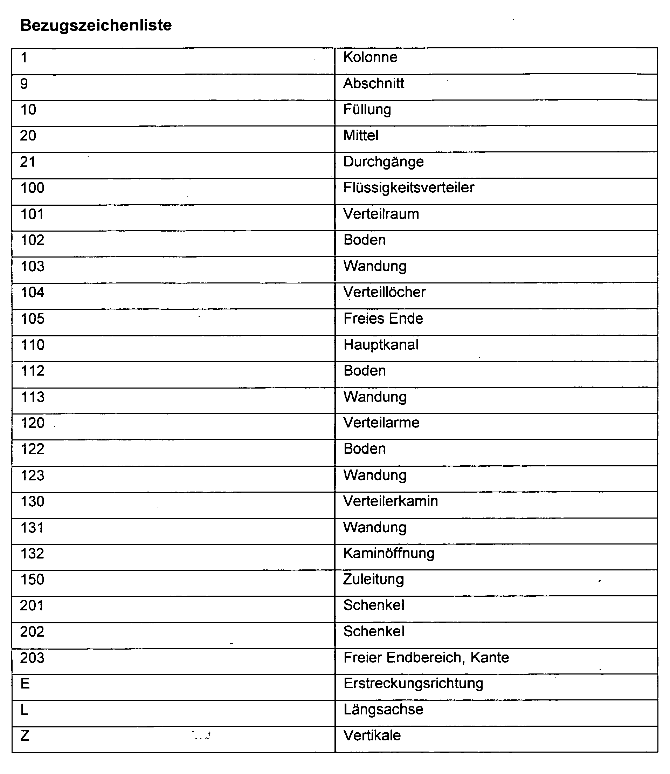

Figur 6 zeigt schließlich einen Flüssigkeitsverteiler 100, der einen als Sammelraum ausgebildeten Verteilraum 101 aufweist bzw. dessen Verteilraum 101 zumindest einen solchen Sammelraum umfasst.

Der Sammelraum 101 weist dabei einen Boden 102 auf, von dem eine umlaufende Wandung 103 abgeht. Der Boden 102 weist eine Mehrzahl an rechteckförmigen Durchgangsöffnungen auf, von deren umlaufenden Rändern jeweils umlaufende Wandungen 131 entlang der Vertikalen Z abgehen, so dass Verteilerkamine 130 gebildet werden, durch die hindurch eine in der Kolonne 1 aufsteigende gasförmige Phase nach oben durch den Sammelraum 101 hindurch geleitet werden kann. Zum Verteilen einer im Sammelraum 101 gesammelten flüssigen Phase F weist der Boden 102 weiterhin Verteillöcher 104 auf, durch die hindurch die flüssige Phase F auf einen Querschnitt einer unterhalb des Sammelraumes 101 angeordneten Füllung 10 einer Kolonne 1 gegeben werden kann.

Die Wandungen 131 der Verteilerkamine 130 begrenzen jeweils Kaminöffnungen 132, die ggf. überdacht sein können, damit eine in der Kolonne 1 nach unten fließende flüssige Phase F nicht in die Verteilerkamine130 eindringen kann.

Auf dem Boden 102 des Sammelraumes 101 ist zwischen den einzelnen Verteilerkaminen 130 nach Art der Figur 5 eine Mehrzahl an Füllelementen 20 nebeneinander und übereinander angeordnet, die den Boden 102 des Sammelraumes 101 bedecken und dabei eine dreidimensionale Packung bilden, die eine Mehrzahl an engen Durchgängen 21 für die zu verteilende Flüssigkeit F bereitstellt. Hierdurch wird die Verteilgüte des Flüssigkeitsverteilers 100, wie oben in Bezug auf Figur 5 beschrieben, verbessert.

Der Sammelraum 101 kann insbesondere unterhalb einer Füllung 10 einer Kolonne 1 angeordnet sein und die abfließende flüssige Phase F aufnehmen und über die in dem Boden 102 angeordneten Verteillöcher 104 nach unten weiter verteilen. Bei dieser Anordnung sind die jeweiligen Kaminöffnungen 132 zu überdachen (siehe oben). Es ist natürlich auch möglich, dass die zu verteilende flüssige Phase F dem Sammelraum 101 über eine Leitung nach Art der Figuren 1 oder 3 zugeleitet wird.

## Patentansprüche

1. Kolonne, mit:
- einem Abschnitt (9), in dem eine Füllung (10) in Form einer Mehrzahl an Füllkörpern oder einer Packung angeordnet ist,
- einem Flüssigkeitsverteiler (100) zur Verteilung einer Flüssigkeit (F) auf jene Füllung (10), und
- einem Verteilraum (101) des Flüssigkeitsverteilers (100), über den die Flüssigkeit (F) auf jene Füllung (10) der Kolonne (1) verteilbar ist,
**dadurch gekennzeichnet,**
**dass** im Verteilraum (101) des Flüssigkeitsverteilers (100) ein zusätzliches Mittel (20) angeordnet ist, das eine Mehrzahl an Durchgängen (21) für die zu verteilende Flüssigkeit (F) ausbildet.

2. Kolonne nach Anspruch 1, **dadurch gekennzeichnet, dass** das Mittel (20) durch eine Mehrzahl an aneinander anliegenden und/oder übereinander liegenden Füllelementen (22), insbesondere in Form von Kugeln, Ringzylindern, Sattelringen und/oder Sattelkörpern, gebildet ist.

3. Kolonne nach Anspruch 1, **dadurch gekennzeichnet, dass** das Mittel (20) durch ein Drahtgestrick und/oder Streckmetall gebildet ist.

4. Kolonne nach Anspruch 1, **dadurch gekennzeichnet,** das dass Mittel (20) als ein Sieb zum Abscheiden von Feststoffpartikeln aus der zu verteilenden Flüssigkeit (F) ausgebildet ist, insbesondere mit einer Vielzahl an Durchgängen (21) in Form von Durchgangsöffnungen des Siebes (20).

5. Kolonne nach Anspruch 4, **dadurch gekennzeichnet, dass** das Sieb (20) aus einem Metall besteht.

6. Kolonne nach einem der vorhergehenden Ansprüche, **dadurch gekennzeichnet, dass** das Mittel (20) so in dem Verteilraum (101) angeordnet ist, dass die zu verteilende Flüssigkeit (F) durch das Mittel (20) gebremst wird, Flüssigkeitsbewegungen durch das Mittel (20) gemindert, und/oder eine Entgasung der in den Durchgängen (21) aufgenommenen, zu verteilenden Flüssigkeit (F) befördert wird.

7. Kolonne nach einem der vorhergehenden Ansprüche, **dadurch gekennzeichnet, dass** der Verteilraum (101) einen oberhalb des Abschnitts (9) angeordneten Hauptkanal (110) zum Verteilen der Flüssigkeit (F) auf davon abgehende Verteilarme (120) aufweist, die jeweils zum Verteilen der Flüssigkeit (F) auf die Füllung (10) der Stoffaustauschkolonne (1) ausgebildet sind.

8. Kolonne nach Anspruch 7, **dadurch gekennzeichnet, dass** das Mittel (20) im Hauptkanal (110) und/oder in den Verteilarmen (120) angeordnet ist.

9. Kolonne nach Anspruch 4 und nach Anspruch 7 oder 8 , **dadurch gekennzeichnet, dass** das Mittel (20) in Form des Siebes im Hauptkanal (120) angeordnet ist, wobei das Sieb (20) insbesondere aus zwei längs erstreckten, aufeinander zulaufenden Schenkeln (201, 202) gebildet ist, und wobei insbesondere die beiden Schenkel (201, 202) entlang einer Erstreckungsrichtung (E) längs erstreckt ausgebildet sind, die mit einer Erstreckungsrichtung (E), entlang der sich der Hauptkanal (120) längs erstreckt, zusammenfällt.

10. Kolonne nach Anspruch 4, **dadurch gekennzeichnet, dass** der Verteilraum (101) als ein Verteiltopf mit einem Boden (102) mit Verteillöchern (104) zum Verteilen der Flüssigkeit (F) und einer davon abgehenden, umlaufenden Wandung (103) ausgebildet ist, wobei das Sieb (20) trichterförmig, insbesondere konusförmig ausgebildet ist, so dass das Sieb (20) ein sich verjüngendes freies Ende (105) aufweist, und wobei das Sieb (20) derart im Verteiltopf (101) angeordnet ist, dass jenes freie Ende (105) in Richtung des Bodens (102) weist.

11. Kolonne nach Ansprüche 6 soweit rückbezogen nach Anspruch 2 oder 3, **dadurch gekennzeichnet, dass** der Verteilraum (101) als ein Sammelraum zum Sammeln der zu verteilenden Flüssigkeit (F) ausgebildet ist, mit einem Boden (102) mit Verteillöchern (104) zum Verteilen der Flüssigkeit (F) und einer vom Boden (102) abgehenden, umlaufenden Wandung (103), wobei vom Boden (102) Verteilerkamine (130) zum Durchleiten einer gasförmigen Phase durch den Sammelraum (101) abgehen, und wobei das besagte Mittel (20) insbesondere zwischen den Verteilerkaminen (130) am Boden (102) des Sammelraumes (101) angeordnet ist.
